# FASCICULE DE BREVET EUROPEEN

(11) **EP 3 384 139 B1**
(45) Date de publication et mention de la délivrance du brevet: **30.10.2019**
(21) Numéro de dépôt: 16819336.5
(22) Date de dépôt: 22.11.2016
(51) Int. Cl.: B60K 5/12, F01P 11/02, F01P 3/02, F02F 1/36

(54) **ENSEMBLE POUR MOTEUR THERMIQUE COMPORTANT UN SUPPORT MOTEUR INTEGRANT UNE FONCTION DE DEGAZAGE DE CULASSE**
ANORDNUNG FÜR EINE BRENNKRAFTMASCHINE MIT MOTORLAGER MIT EINER ZYLINDERKOPFENTLÜFTUNGSFUNKTION
ASSEMBLY FOR A HEAT ENGINE COMPRISING AN ENGINE MOUNT INCORPORATING A CYLINDER HEAD DEGASSING FUNCTION

(30) Priorité: 01.12.2015 FR 1561656
(43) Date de publication de la demande: 10.10.2018
(73) Titulaire: PSA AUTOMOBILES S.A., 78300 Poissy (FR)
(72) Inventeur: BRAZ, Claude, 93150 Le Blanc Mesnil (FR)
(86) Numéro de dépôt international: PCT/FR2016/053043
(87) Numéro de publication internationale: WO 2017/093633

(56) Documents cités:
- EP-A1- 0 561 673
- DE-A1-102005 037 521
- DE-A1-102013 215 614
- FR-A- 1 281 061
- GB-A- 2 502 808
- US-A1- 2003 062 211
- US-A1- 2011 259 545
- US-B1- 6 199 516

## Description

La présente invention porte sur un ensemble pour moteur thermique comportant un support moteur intégrant une fonction de dégazage de culasse. L'invention trouve une application particulièrement avantageuse, mais non exclusive, dans le domaine des véhicules automobiles.

Un support moteur, appelé aussi support de bloc moteur, est le support de fixation de bloc moteur sur châssis de véhicule automobile. Il réalise donc la liaison entre un châssis et un bloc moteur de véhicule automobile. Le support moteur désigne conventionnellement un composant servant, comme son nom l'indique, à supporter le moteur. Il sert également à amortir les chocs dû aux vibrations qu'induise le fonctionnement du moteur. En effet, le support moteur est, par exemple, fait de deux matières : caoutchouc et métal, le caoutchouc amortissant les chocs et le métal supportant le poids du moteur. Il est également connu sous la dénomination anglaise de « silent bloc ».

Pour certaines motorisations appliquées dans un autre contexte que celui définit par le motoriste, il peut être nécessaire de revoir le circuit de refroidissement du moteur. En particulier, il peut être nécessaire de modifier la configuration des éléments assurant le dégazage de la culasse pour évacuer l'air susceptible d'être contenu dans les cavités où circule le liquide de refroidissement, telles que les chambres d'eau, qui présentent des formes complexes.

En effet, en positionnant le moteur dans une position et une inclinaison différente de celle définie à l'origine, le circuit de refroidissement ne permet pas toujours de chasser les poches d'air de la chambre d'eau de la culasse. Or, si la culasse n'est pas complétement dégazée, plusieurs défauts dans le circuit de refroidissement peuvent survenir, et plus spécifiquement dans la culasse et sa chambre d'eau, comme un effet érosif sur la surface de la chambre d'eau, ou effet de cavitation, entraînant la dégradation de la chambre d'eau à long terme.

Dans le cas d'un moteur initialement prévu en position transversale mais implanté en position longitudinale, il peut alors être nécessaire de prévoir un circuit de dégazage supplémentaire au moteur d'origine. Ceci oblige à adapter la ligne d'usinage à la diversité de nouvelles architectures en usine de montage, en réalisant par exemple une modification de la culasse par usinage et/ou perçage de ladite culasse pour créer un piquage à proximité du noyau d'eau, et ainsi permettre l'ajout d'un circuit supplémentaire pour évacuer les poches d'air non chassées naturellement par le circuit classique de dégazage via le boîtier de sortie de liquide de refroidissement.

Toutefois, de telles opérations entraînent une augmentation de la durée de fabrication du moteur et la nécessité de prévoir des outillages dédiés, ce qui représente un surcoût de production. Par ailleurs, les culasses modifiées sont souvent obtenues avec difficulté notamment due à la présence d'un noyau complexe pour la fonderie et/ou d'un procédé d'usinage s'intégrant mal dans la ligne d'usinage.

Un ensemble pour moteur thermique selon le préambule de la revendication 1 est connu du document FR1281061A.

Des supports moteurs comportant des éléments de circuit de refroidissement sont connus en soi par exemple des documents GB2502808 A, US6199516 B1, DE102013215614 A1 et DE102005037521 A1.

L'invention vise à remédier à ces inconvénients en proposant un ensemble pour moteur thermique selon la revendication 1.

Ainsi, l'invention permet de conserver l'architecture du moteur d'origine et de la culasse en retirant uniquement le bouchon de fermeture d'un circuit de liquide de refroidissement en bout de culasse et en modifiant le support moteur fixé à la culasse comme zone d'interface pour obtenir un dégazage supplémentaire. Autrement dit, en prévoyant d'intégrer la fonction de dégazage dans le support moteur, l'invention permet de réduire les coûts et ne nécessite aucune modification structurelle de la culasse et/ou de sa chambre d'eau.

Selon une réalisation, le support moteur est en communication fluidique avec la culasse.

Selon une réalisation, le support moteur est relié au boîtier de dégazage par l'intermédiaire d'un tuyau.

Selon une réalisation, l'ensemble comporte un joint d'étanchéité monté entre le support moteur et le tuyau.

Selon une réalisation, le joint d'étanchéité monté entre le support moteur et le tuyau est intégré au tuyau.

Selon une réalisation, l'ensemble comporte un joint d'étanchéité monté entre le support moteur et la culasse.

Selon une réalisation, l'ensemble comporte des organes de fixation, tels que des vis, pour fixer le support moteur sur la culasse.

L'invention concerne également un procédé de montage de l'ensemble décrit précédemment, et qui comprend une opération de mise en état fonctionnelle du deuxième piquage de dégazage par mise en connexion fluidique du support moteur avec la culasse

De préférence, ladite opération de mise en état fonctionnelle comprend : - une étape de retrait d'un bouchon de fermeture d'une cavité de ladite culasse, - une étape de mise en place dudit support moteur et d'un joint d'étanchéité sur ladite culasse au niveau de ladite cavité.

A noter que le joint peut être remplacé par tout autre moyen assurant l'étanchéité lors du raccordement de l'ouverture à un tuyaux.

Avantageusement, ladite opération de mise en état fonctionnelle comprend également les opérations suivantes : - une étape de connexion d'un tuyau et d'un joint d'étanchéité sur ledit support moteur, - une étape de raccordement dudit tuyau à un boîtier de dégazage.

Avantageusement, ladite opération de mise en état fonctionnelle comprend également: - une étape de fixation dudit support moteur sur ladite culasse au moyen d'organes de fixation correspondants, tels que des vis.

Selon une mise en œuvre, le procédé de montage de l'ensemble comprend les étapes suivantes, de préférence successivement:
- une étape de retrait d'un bouchon de fermeture d'une cavité de la culasse,
- une étape de mise en place du support moteur et d'un joint d'étanchéité sur la culasse au niveau de la cavité,
- une étape de fixation du support moteur sur la culasse au moyen d'organes de fixation correspondants, tels que des vis,
- une étape de connexion d'un tuyau et d'un joint d'étanchéité sur le support moteur,
- une étape de raccordement du tuyau à un boîtier de dégazage.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective d'un ensemble de dégazage pour moteur thermique selon la présente invention;
Les figures 2a à 2f sont des vues en perspective illustrant les différentes étapes de réalisation d'un ensemble de dégazage pour moteur thermique selon la présente invention.

Les éléments identiques, similaires, ou analogues conservent la même référence d'une figure à l'autre.

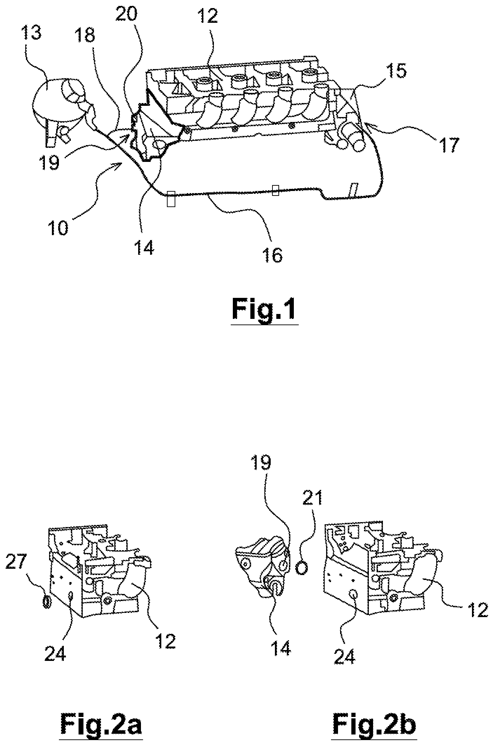

La figure 1 représente un ensemble de dégazage 10 pour moteur thermique, notamment de véhicule automobile, comportant une culasse 12 munie de tubulures parcourues par un liquide de refroidissement, par exemple à base d'eau et d'anti-gel. Une pompe de refoulement (non représentée) située par exemple en amont du moteur assure la circulation du liquide de refroidissement dans les tubulures du moteur.

Un boîtier de dégazage 13 permet de retirer des bulles de gaz présentes dans le liquide de refroidissement. En effet, ces bulles de gaz apparaissent dans le liquide de refroidissement de manière ponctuelle lorsque le moteur est chaud ou lors d'un défaut de remplissage ou lors d'un dysfonctionnement du moteur.

A cet effet, on prévoit un premier piquage 17 réalisé dans un boîtier de sortie de liquide de refroidissement 15, plus communément appelé boîtier de sortie d'eau, situé au niveau d'une face d'extrémité de la culasse 12. Le premier piquage 17 correspond à une ouverture traversante réalisée dans une paroi du boîtier 15. Un tuyau 16 est connecté d'une part au piquage 17 du boîtier 15 et d'autre part à une entrée du boîtier de dégazage 13 pour acheminer le liquide à dégazer vers le boîtier 13.

Un deuxième piquage 19 de dégazage est réalisé à travers un support moteur 14 qui est en communication fluidique avec la culasse 12. On rappelle que le support moteur assure la liaison entre un châssis (non représenté) et un bloc moteur / la culasse du moteur de véhicule automobile Le support moteur 14 est plaqué contre une face d'extrémité de la culasse 12 qui est opposée à la face au niveau de laquelle est situé le boîtier 15. Le piquage 19 correspond à un perçage interne traversant du support moteur 14. Le perçage interne 19 débouche d'une part dans une cavité 24 de la culasse 12 et d'autre part vers un tuyau 18 assurant une communication entre le perçage 19 du support moteur 14 et l'entrée du boîtier de dégazage 13. Le tuyau 18 pourra assurer la communication avec l'entrée du boîtier 13 en étant connecté directement à cette entrée 13, ou, comme cela est représenté sur la figure 1, en étant connecté à une dérivation du tuyau 16.

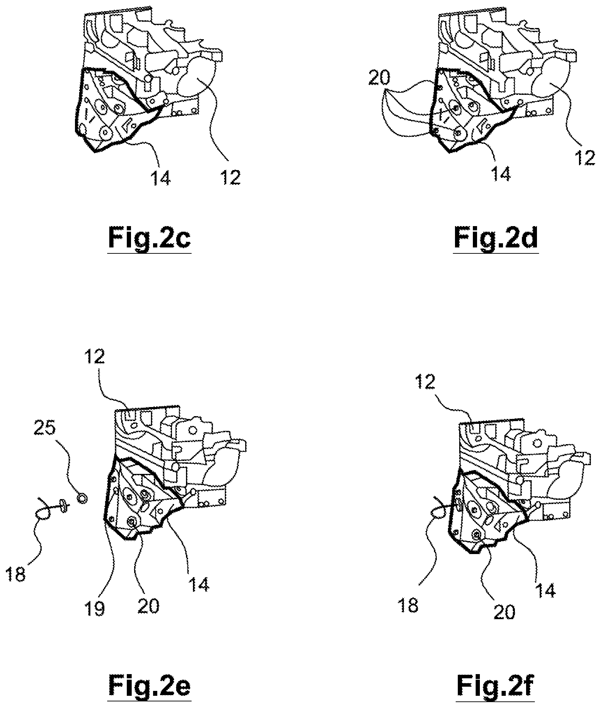

De préférence, le support moteur 14 est fixé à la culasse 12 par des organes de fixation 20, tels que des vis, pénétrant dans des trous réalisés dans le support moteur 14 et coopérant avec des taraudages correspondants réalisés dans la culasse 12 (cf. figure 2d). En outre, pour assurer l'étanchéité entre ces deux éléments 12 et 14, un joint 21 est monté entre la culasse 12 et le support moteur 14, comme cela est bien visible sur la figure 2b.

Par ailleurs, pour assurer l'étanchéité de la jonction entre le perçage 19 et le tuyau 18, un joint 25 est monté entre le support moteur 14 et le tuyau 18, comme on peut le voir sur la figure 2e. Le joint d'étanchéité 25 pourra être un joint rapporté ou intégré au tuyau 18.

On décrit ci-après, en référence avec les figures 2a à 2f, le procédé de montage d'un support moteur 14 sur une culasse 12 d'un véhicule automobile.

Comme cela est illustré sur la figure 2a, le bouchon de fermeture 27 destiné à obturer une cavité 24 est retiré au moyen d'un extracteur. Ce bouchon 27 est normalement utilisé pour garantir l'étanchéité de la culasse 12 en fermant, par vissage ou emmanchement à force, une ouverture générée suite à la fabrication de la culasse nécessitant le passage de broches pour former les canaux d'huile dans le carter ainsi que des évents correspondants.

Comme cela est montré sur la figure 2b, le support moteur 14 et un joint d'étanchéité 21 sont mis en place au niveau de la cavité 24 de la culasse 12.

Ensuite, le support moteur 14 est fixé à la culasse 12 au moyen d'organes de fixation 20, tels que des vis, comme cela est représenté sur la figure 2d. A cet effet, les vis 20 sont insérées dans les trous du support moteur 14 de manière à coopérer avec des alésages taraudés correspondants de la culasse 12 et vissées par exemple au moyen d'une visseuse par l'opérateur.

Comme cela est montré sur les figures 2e et 2f, un tuyau 18 ainsi que le joint d'étanchéité 25 sont connectés au support moteur 14. Le tuyau 18 est ainsi connecté par une de ses extrémités à l'extrémité du perçage 19 débouchant vers l'extérieur.

Enfin, le tuyau 18 est raccordé par son autre extrémité au boîtier de dégazage 13, comme cela est visible sur la figure 1.

L'invention permet ainsi de conserver l'architecture du moteur d'origine et de la culasse 12 en retirant uniquement le bouchon de fermeture 27 d'un circuit de liquide de refroidissement en bout de culasse 12 et en modifiant le support moteur 14 fixé à la culasse 12 comme zone d'interface pour obtenir un dégazage supplémentaire. Autrement dit, en prévoyant d'intégrer la fonction de dégazage dans le support moteur 14, l'invention permet de réduire les coûts et ne nécessite aucune modification structurelle de la culasse 12 et/ou de sa chambre d'eau.

## Revendications

1. Ensemble pour moteur thermique (10), notamment de véhicule automobile, comportant une culasse (12), un boîtier de sortie de liquide de refroidissement (15), un support moteur (14) fixé à la culasse (12), un boîtier de dégazage (13) et un premier piquage (17) de dégazage réalisé dans le boîtier de sortie de liquide de refroidissement (15) pour acheminer le liquide à dégazer vers le boîtier (13), ledit ensemble comportant en outre un deuxième piquage (19) de dégazage pour acheminer le liquide à dégazer de la culasse (12) vers le boîtier (13), ce deuxième piquage (19) débouchant dans une ouverture d'une cavité (24) de la culasse (12) où circule le liquide de refroidissement, **caractérisé en ce que** le deuxième piquage (19) de dégazage est réalisé à travers le support moteur (14) et **en ce que** cette ouverture a pour fonction lors de la fabrication de la culasse de permettre le passage de broches pour former des canaux d'huile ainsi que des évents correspondants.

2. Ensemble selon la revendication 1, **caractérisé en ce que** ledit support moteur (14) est en communication fluidique avec ladite culasse (12).

3. Ensemble selon la revendication 2, caractérisé en ce ledit support moteur (14) est relié audit boîtier de dégazage (13) par l'intermédiaire d'un tuyau (18).

4. Ensemble selon la revendication 3, **caractérisé en ce qu'**il comporte un joint d'étanchéité (25) monté entre ledit support moteur (14) et ledit tuyau (18).

5. Ensemble selon la revendication 4, **caractérisé en ce que** ledit joint d'étanchéité (25) monté entre ledit support moteur (14) et ledit tuyau (18) est intégré audit tuyau (18).

6. Ensemble selon l'une quelconque des revendications 1 à 5, **caractérisé en ce qu'**il comporte un joint d'étanchéité (21) monté entre ledit support moteur (14) et ladite culasse (12).

7. Ensemble selon l'une quelconque des revendications 1 à 6, **caractérisé en ce qu'**il comporte des organes de fixation (20), tels que des vis, pour fixer ledit support moteur (14) sur ladite culasse (12).

8. Procédé de montage de l'ensemble selon l'une des revendications précédentes, **caractérisé en ce qu'**il comprend une opération de mise en état fonctionnelle du deuxième piquage de dégazage par mise en connexion fluidique du support moteur (14) avec la culasse (12).

9. Procédé de montage selon la revendication précédente, **caractérisé en ce que** ladite opération de mise en état fonctionnelle comprend : - une étape de retrait d'un bouchon de fermeture (27) d'une cavité (24) de ladite culasse (12), - une étape de mise en place dudit support moteur (14) et d'un joint d'étanchéité (21) sur ladite culasse (12) au niveau de ladite cavité (24).

10. Procédé de montage selon la revendication précédente, **caractérisé en ce que** ladite opération de mise en état fonctionnelle comprend également les opérations suivantes : - une étape de connexion d'un tuyau (18) et d'un joint d'étanchéité (25) sur ledit support moteur (14), - une étape de raccordement dudit tuyau (18) à un boîtier de dégazage (13).

11. Procédé de montage selon la revendication précédente, **caractérisé en ce que** ladite opération de mise en état fonctionnelle comprend également : - une étape de fixation dudit support moteur (14) sur ladite culasse (12) au moyen d'organes de fixation (20) correspondants, tels que des vis,

## Patentansprüche

1. Anordnung für Brennkraftmaschine (10), insbesondere eines Kraftfahrzeugs, die einen Zylinderkopf (12), ein Kühlflüssigkeitsausgangsgehäuse (15), ein Motorlager (14), das an dem Zylinderkopf (12) befestigt ist, ein Entlüftungsgehäuse (13) und eine erste Entlüftungsabzweigung (17) umfasst, die in dem Kühlflüssigkeitsausgangsgehäuse (15) hergestellt ist, um die zu entgasende Flüssigkeit zu dem Gehäuse (13) zu befördern, wobei die Anordnung außerdem eine zweite Entlüftungsabzweigung (19) umfasst, um die zu entgasende Flüssigkeit von dem Zylinderkopf (12) zu dem Gehäuse (13) zu befördern, wobei diese zweite Abzweigung (19) in eine Öffnung eines Hohlraums (24) des Zylinderkopfs (12) mündet, in der die Kühlflüssigkeit zirkuliert, **dadurch gekennzeichnet, dass** die zweite Entlüftungsabzweigung (19) durch das Motorlager (14) hindurch hergestellt ist, und dass diese Öffnung die Aufgabe hat, bei der Herstellung des Zylinderkopfs das Durchgehen von Spindeln zu erlauben, um Ölkanäle sowie entsprechende Entlüftungen zu bilden.

2. Anordnung nach Anspruch 1, **dadurch gekennzeichnet, dass** das Motorlager (14) in Fluidkommunikation mit dem Zylinderkopf (12) steht.

3. Anordnung nach Anspruch 2, **dadurch gekennzeichnet, dass** das Motorlager (14) mit dem Entlüftungsgehäuse (13) über eine Rohrleitung (18) verbunden ist.

4. Anordnung nach Anspruch 3, **dadurch gekennzeichnet, dass** sie eine Dichtung (25) umfasst, die zwischen dem Motorlager (14) und der Rohrleitung (18) montiert ist.

5. Anordnung nach Anspruch 4, **dadurch gekennzeichnet, dass** die Dichtung (25), die zwischen dem Motorlager (14) und der Rohrleitung (18) montiert ist, in die Rohrleitung (18) integriert ist.

6. Anordnung nach einem der Ansprüche 1 bis 5, **dadurch gekennzeichnet, dass** sie eine Dichtung (21) umfasst, die zwischen dem Motorlager (14) und dem Zylinderkopf (12) montiert ist.

7. Anordnung nach einem der Ansprüche 1 bis 6, **dadurch gekennzeichnet, dass** sie Befestigungsorgane (20), wie Schrauben, zum Befestigen des Motorlagers (14) auf dem Zylinderkopf (12) umfasst.

8. Verfahren zur Montage der Anordnung nach einem der vorstehenden Ansprüche, **dadurch gekennzeichnet, dass** es einen Vorgang des Versetzens in Funktionszustand der zweiten Entgasungsabzweigung durch Herstellen der Fluidverbindung zwischen dem Motorlager (14) und dem Zylinderkopf (12) umfasst.

9. Verfahren zur Montage nach dem vorstehenden Anspruch, **dadurch gekennzeichnet, dass** der Vorgang des Versetzens in Betriebszustand Folgendes umfasst: - einen Schritt zum Entfernen eines Verschlussstopfens (27) eines Hohlraums (24) des Zylinderkopfs (12), - einen Schritt des Anbringens des Motorlagers (14) und einer Dichtung (21) auf dem Zylinderkopf (12) im Bereich des Hohlraums (24).

10. Montageverfahren nach dem vorstehenden Anspruch, **dadurch gekennzeichnet, dass** der Vorgang des Versetzens in Funktionszustand auch die folgenden Vorgänge umfasst: - einen Schritt des Verbindens einer Rohrleitung (18) und einer Dichtung (25) auf dem Motorlager (14), - einen Schritt des Anschließens der Rohrleitung (18) an ein Entgasungsgehäuse (13).

11. Montageverfahren nach dem vorstehenden Anspruch, **dadurch gekennzeichnet, dass** der Vorgang des Versetzens in Funktionszustand auch Folgendes umfasst: - einen Befestigungsschritt des Motorlagers (14) auf dem Zylinderkopf (12) mittels entsprechenden Befestigungsorganen (20), wie Schrauben.

## Claims

1. An assembly for a heat engine (10), in particular for a motor vehicle, comprising a cylinder head (12), a coolant outlet housing (15), an engine mount (14) fixed to the cylinder head (12), a degassing housing (13) and a first degassing branch connection (17) formed in the coolant outlet housing (15) for conveying the liquid which is to be degassed to the housing (13), said assembly further comprising a second degassing branch connection (19) for conveying the liquid to be degassed from the cylinder head (12) to the housing (13), this second branch connection (19) opening out in an opening of a cavity (24) of the cylinder head (12) where the coolant circulates, **characterized in that** the second degassing branch connection (19) is formed through the engine mount (14) and **in that** this opening has the function, during manufacture of the cylinder head, of permitting the passage of pins for forming oil ducts and also corresponding vents.

2. The assembly according to Claim 1, **characterized in that** said engine mount (14) is in fluidic communication with said cylinder head (12).

3. The assembly according to Claim 2, **characterized in that** said engine mount (14) is connected to said degassing housing (13) by means of a pipe (18).

4. The assembly according to Claim 3, **characterized in that** it comprises a gasket (25) mounted between said engine mount (14) and said pipe (18).

5. The assembly according to Claim 4, **characterized in that** said gasket (25) mounted between said engine mount (14) and said pipe (18) is integrated to said pipe (18).

6. The assembly according to any one of Claims 1 to 5, **characterized in that** it comprises a gasket (21) mounted between said engine mount (14) and said cylinder head (12).

7. The assembly according to any one of Claims 1 to 6, **characterized in that** it comprises attachment members (20), such as screws, for fixing said engine mount (14) on said cylinder head (12).

8. A method for mounting the assembly according to one of the preceding claims, **characterized in that** it includes an operation of putting into functional state the second degassing branch connection by putting into fluidic connection the engine mount (14) with the cylinder head (12).

9. The method for mounting according to the preceding claim, **characterized in that** said operation for putting into functional state includes: - a step of withdrawal of a closure plug (27) of a cavity (24) of the said cylinder head (12), - a step of putting in place the said engine mount (14) and a gasket (21) on said cylinder head (12) at the level of said cavity (24) .

10. The method for mounting according to the preceding claim, **characterized in that** said operation for putting into functional state also includes the following operations: - a step of connection of a pipe (18) and a gasket (25) on said engine mount (14), - a step of connecting said pipe (18) to a degassing housing (13).

11. The method for mounting according to the preceding claim, **characterized in that** said operation for putting into functional state also includes: - a step of fixing the said engine mount (14) on the said cylinder head (12) by means of corresponding attachment members (20), such as screws.
